(19) Europäisches Patentamt / European Patent Office / Office européen des brevets

(11) **EP 2 194 420 B1**

(12) **EUROPÄISCHE PATENTSCHRIFT**

(45) Veröffentlichungstag und Bekanntmachung des Hinweises auf die Patenterteilung:
**20.09.2017 Patentblatt 2017/38**

(51) Int Cl.:
**G02B 27/32** *(2006.01)*    **G02B 23/10** *(2006.01)*

(21) Anmeldenummer: **09177563.5**

(22) Anmeldetag: **01.12.2009**

(54) **Vorrichtung zur Einblendung eines Bildes in den Strahlengang einer Zieloptik**

Device for blending an image into the optical beam of a target lens

Dispositif de mélange d'une image dans le faisceau de rayons d'une optique cible

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.12.2008 DE 102008059892**

(43) Veröffentlichungstag der Anmeldung:
**09.06.2010 Patentblatt 2010/23**

(73) Patentinhaber:
• **Carl Zeiss Sports Optics GmbH**
  **35576 Wetzlar (DE)**
• **Carl Zeiss AG**
  **73447 Oberkochen (DE)**

(72) Erfinder:
• **Dobschal, Hans-Jürgen**
  **99510 Kleinromstedt (DE)**
• **Rudolph, Günter**
  **07743 Jena (DE)**
• **Menzel, Eva-Maria**
  **07743 Jena (DE)**
• **Sinn, Dr., Christian**
  **35390 Giessen (DE)**
• **Lindig, Karsten**
  **99084 Erfurt (DE)**
• **Wagner, Thomas**
  **35435 Wettenberg (DE)**

(74) Vertreter: **Freischem & Partner Patentanwälte mbB**
**Salierring 47-53**
**50677 Köln (DE)**

(56) Entgegenhaltungen:
WO-A1-2006/064301    WO-A1-2007/029032
DE-A1- 19 525 520    DE-A1-102007 021 036
GB-A- 2 077 936    US-A- 4 248 496

**Beschreibung**

Die Erfindung betrifft eine Zieloptik mit einem in Betriebsstellung einem zu beobachtenden Zielobjekt zuzuwendenden Objektiv, einem einem Auge des Beobachters zuzuwendenden Okular, einem Strahlengang und einer Vorrichtung zur Einblendung eines Bildes in den Strahlengang der Zieloptik.

Zukünftige Zieloptiken bzw. Zielfernrohre sollen mit ballistischen Systemen ausgestattet werden. Dementsprechend ist eine flexible Zielmarke bzw. ein flexibler Zielpunkt in der Abseheneinheit des Zielfernrohrs wünschenswert. Des weiteren sollten auch andere Informationen im Zielfernrohr angezeigt werden können. Aus der Praxis sind unterschiedliche Einblendungs- bzw. Einspiegelungskonzepte für derartige flexible Zielmarken bekannt. Solche optischen Einspiegelungsverfahren sollten im Wesentlichen folgende Randbedingungen erfüllen. Der Transmissionsgrad für das Hauptlicht bzw. das Beobachtungslicht des Zielfernrohrs bzw. der Zieloptik sollte möglichst hoch (beispielsweise größer 95 %) sein. Die Beugungseffizienz des Einspiegelungsmoduls sollte größer 1 % sein. Darüber hinaus sollte der Bauraum für ein entsprechendes Einspiegelungsmodul an den Bauraum des Zielfernrohrs angepasst sein.

Zusätzlich kann die Notwendigkeit bestehen, die Zielmarke mit dem Zoom des Zielfernrohrs zu vergrößern, damit das Deckungsmaß beim Zoomen erhalten bleibt und eine Entfernungsabschätzung durch den Schützen komfortabel erfolgen kann.

In der EP 0 886 163 B1 ist eine Strichplatte und eine optische Einrichtung mit einer beleuchteten Strichplatte offenbart. Die Strichplatte besteht aus einem Träger und einer auf einer Oberfläche des Trägers aufgebrachten Markierung, welche Licht an einer seitlich angeordneten Lichtquelle weitgehend senkrecht zur Oberfläche abstrahlt, wobei die Markierung als Beugungsgitter ausgebildet ist. Die Markierung kann ein Amplitudengitter mit transparenten Lücken und opaken Stegen aufweisen, welche aus Chrom bestehen. Von Nachteil könnte dabei sein, dass zur Darstellung mehrerer Zielpunkte ein relativ komplexes Markierungsgitter vorgesehen werden müsste und die Lagertoleranzen der Zielpunkte sich sehr stark auf die Gittertoleranzen auswirken würden.

Die EP 1 653 271 A1 betrifft eine beleuchtbare Strichplatte, welche einen seitlich neben dem Träger angeordneten Spiegel mit zwei Brennpunkten aufweist. In einem Brennpunkt ist die Lichtquelle angeordnet. Im zweiten Brennpunkt ist das Strichbild angeordnet, wobei gegebenenfalls auch eine Totalreflexion an einer der beiden Trägeroberflächen möglich ist, um die Lichtstrahlen in dem Strichbild zu fokussieren.

Die DE 195 25 520 C2 beschreibt die Einkopplung von Bildern in Strahlengänge von Mikroskopen mittels diffraktiver optischer Elemente, insbesondere Reflexions- und Transmissionsgittern. Die dort beschriebenen diffraktiven optischen Elemente besitzen keine abbildende Wirkung. Die abbildende Wirkung wird durch weitere optische Elemente erzielt.

Zum weiteren Stand der Technik wird noch auf die WO 00/16150 verwiesen.

Ausgehend davon liegt der vorliegenden Erfindung die Aufgabe zugrunde, eine Vorrichtung der eingangs erwähnten Art zu schaffen, welche eine flexible Zielpunkteinspiegelung, insbesondere unter den eingangs genannten Randbedingungen, ermöglicht und welche insbesondere eine möglichst geringe Anzahl an zusätzlichen optischen Elementen benötigt.

Diese Aufgabe wird erfindungsgemäß durch eine Zieloptik nach Anspruch 1 gelöst. Durch diese Maßnahmen wird in vorteilhafter Weise ein optisches Einspiegelungskonzept für eine Zieloptik geschaffen, welche einen hohen Transmissionsgrad für das Hauptlicht bzw. Beobachtungslicht in dem Strahlengang der Zieloptik gewährleistet, während eine flexible Zielpunkteinspiegelung bzw. -einblendung ermöglicht wird. Die Beugungseffizienz des Einspiegelungsmoduls kann größer als 1 % sein. Des weiteren ist der Einsatz eines teilweise lichtdurchlässigen optischen Trägerelements mit einem diffraktiven optischen Einkoppelelement und einem diffraktiven optischen Auskoppelelement bauraumschonend, d. h. dass eine Anpassung an den Zielfernrohr- bzw. Zieloptikbauraum in einfacher Weise erfolgen kann. Weitere bzw. andere Informationseinspiegelungen werden ebenfalls durch die erfindungsgemäße Vorrichtung ermöglicht.

Erfindungsgemäß wird zusätzlich zur Strahlumlenkung und Überlagerung auch die Kollimation und Fokussierung der Lichtbündel übernommen. Die optischen Einkoppel- und Auskoppelelemente besitzen also zusätzlich eine abbildende Funktion, wodurch es ermöglicht wird, ohne weitere konventionelle optische Bauelemente zwischen Objekt und Zwischenbildebene auszukommen.

Das diffraktive optische Einkoppelelement kann eine Strahlablenkung des einzukoppelnden Lichts auf einen derartigen Winkel bewirken, dass innerhalb des optischen Trägerelements eine Totalreflexion des einzukoppelnden Lichts erreicht wird.

Vorteilhaft ist es, wenn das diffraktive optische Einkoppelelement eine Kollimation des einzukoppelnden Lichts bewirkt.

Das diffraktive optische Auskoppelelement kann mittels seiner beugenden Umlenkfunktion einen Austritt des eingekoppelten Lichts aus dem optischen Trägerelement in den Strahlengang der Zieloptik bewirken und somit die Überlagerung mit dem Beobachtungslicht in dem Beobachtungsstrahlengang vornehmen.

Vorteilhaft ist es, wenn das diffraktive optische Auskoppelelement eine Fokussierung des einzukoppelnden Lichts in den Strahlengang der Zieloptik bewirkt.

Die diffraktiven optischen Einkoppel- und Auskoppelelemente können holographisch, mechanisch oder synthetisch hergestellt werden. Vorzugsweise sind sie als holographische, d. h. holographisch hergestellte optische Elemente bzw. Hologramme ausgebildet und könnten durch eine Überlagerung von zwei Kugelwellen oder durch eine Überlagerung von einer Kugelwelle und einer Planwelle hergestellt werden.

Erfindungsgemäß kann ferner vorgesehen sein, dass eine dem diffraktiven optischen Einkoppelelement zugewandte Bildwiedergabeeinheit vorgesehen ist, welche das einzukoppelnde Licht des einzublendenden Bildes erzeugt und auf das diffraktive optische Einkoppelelement leitet. Als Bildgebermodul bzw. Bildwiedergabeeinheit können LED, OLED-Anzeigen, LCD oder Laserscannermodule dienen.

Das der Bildwiedergabeeinheit zugewandte diffraktive optische Einkoppelelement übernimmt die Aufgabe der Kollimation und Strahlablenkung auf einen Winkel, der für das Erreichen der Totalreflexion innerhalb des optischen Trägerelements notwendig ist. Das diffraktive optische Auskoppelelement ermöglicht durch seine beugende Umlenkfunktion den Austritt des Lichts aus dem Trägerelement und fokussiert gleichzeitig das Licht in ein Zwischenbild der Zieloptik.

Das wenigstens eine diffraktive optische Einkoppelelement kann als Reflexionsbeugungsgitter oder Transmissionsbeugungsgitter ausgebildet sein. Das wenigstens eine diffraktive optische Auskoppelelement kann ebenfalls als Reflexionsbeugungsgitter oder Transmissionsbeugungsgitter ausgebildet sein. Da eine annähernd gleiche Grundfrequenz bzw. Strichzahl der beiden Gitter gewählt werden kann, ist es auch möglich, einen größeren Spektralbereich an Licht zu übertragen. Vorzugsweise ist das diffraktive optische Einkoppelelement als Reflexionsbeugungsgitter und das diffraktive optische Auskoppelelement als Transmissionsbeugungsgitter ausgebildet. Für die Lichtführung im Trägerelement sind verschiedene Ausführungsformen denkbar. Der Vorteil der Vorzugsvariante besteht insbesondere darin, dass zum Einen für die Lichteinkopplung in das optische Trägerelement ein Reflexionshologramm die notwendige Beugungseffizienz bereitstellt und zum Anderen das Auskoppelhologramm einen spektralen Transmissionsgrad größer 95% zulässt. Des weiteren können das diffraktive optische Einkoppelelement und das diffraktive optische Auskoppelelement beide als Transmissionsbeugungsgitter oder beide als Reflexionsbeugungsgitter ausgeführt sein. Zudem besteht die Möglichkeit, das diffraktive optische Einkoppelelement als Transmissionsbeugungsgitter und das diffraktive optische Auskoppelelement als Reflexionsbeugungsgitter auszuführen.

Die holographische Einspiegelung hat des weiteren den wesentlichen Vorteil, dass zur Einspiegelung weiterer Daten an einem anderen Bildfeldort ein zweites oder auch noch weitere diffraktive optische Einkoppelelemente in das optische Trägerelement integriert werden können, mit denen auch eine polychrome Bildeinspiegelung ermöglicht wird. Dadurch können auch Einspiegelungsinhalte realisiert werden, bei denen gezielt auf bestimmte Bauraumvorgaben Rücksicht genommen werden kann. Sehr vorteilhaft ist es, wenn in dem Strahlengang der Zieloptik in Ausbreitungsrichtung des Beobachtungslichts hinter dem Okular der Zieloptik die Apertur bzw. der Durchmesser des Strahlenbündels des eingekoppelten Lichts wenigstens annähernd an die Apertur bzw. den Durchmesser des Achsstrahlenbündels des Beobachtungslichts der Zieloptik angepasst ist.

Sehr vorteilhaft ist außerdem, dass in dem Strahlengang der Zieloptik die Position der Austrittspupille bzw. die Pupillenlage des eingekoppelten Lichts wenigstens annähernd mit der Position der Austrittspupille des Beobachtungslichts der Zieloptik übereinstimmt. Bei mehreren Zielpunkten entstehen auch für diese jeweils eigene Positionen deren Austrittspupille. Diese sollten entsprechend angepasst sein.

Durch diese Anpassungen des eingespiegelten Lichtbündels können unabhängig von der Position des Auges innerhalb der okularseitigen Pupille gleichzeitig das Zielobjekt und der eingespiegelte Zielpunkt beobachtet werden.

Sonach besteht das Einspiegelungsmodul aus einer kombinierten holographischen Lichtführungs- und Abbildungseinheit, welche eine Mindesttransmission für das Hauptlicht größer 90% realisiert und den Bildort und die Pupille der Bildgebung mit dem Hauptlicht überlagert.

Das optische Trägerelement ist vorzugsweise als aus Glas gebildete Planplatte ausgebildet. Es kann jedoch auch aus Kunststoff gefertigt werden.

Das einzublendende Bild kann eine Zielmarke und/oder beliebige Zusatzinformationen bzw. -daten aufweisen.

Eine Kombination mehrerer diffraktiver optischer Einkoppelelemente mit einem Auskoppelelement ist zur Kombination verschiedenster Bildgebermodule und mit insbesondere polychromer Bildinformation denkbar.

Sehr vorteilhaft ist es, wenn wenigstens ein Teil der wenigstens einen Vorrichtung zur Einblendung eines Bildes bzw. deren optisches Trägerelement in dem Strahlengang der Zieloptik objektivseitig zwischen dem Objektiv und einer dem Objektiv nächsten Zwischenbildebene oder zwischen der dem Objektiv nächsten Zwischenbildebene und einer gegebenenfalls vorhandenen Zoomoptik angeordnet ist.

Dadurch kann eine Einspiegelung eines flexiblen Zielpunktes in die Zieloptik erfolgen, wobei über das Deckungsmaß eine Entfernungsschätzung vom Benutzer durchgeführt werden kann. Das diffraktive optische Auskoppelelement liegt zwischen Zwischenbild und Objektiv oder Zoom, womit sich der Zielpunkt mit dem Zoom vergrößert oder verkleinert. Dadurch, dass das optische Trägerelement nicht direkt in einer Zwischenbildebene der Zieloptik angeordnet ist, werden Verunreinigungen auf der Trägerfläche in vorteilhafter Weise nicht sichtbar abgebildet, sondern wirken sich höchstens als minimaler Lichtverlust aus.

Alternativ oder zusätzlich kann vorgesehen sein, dass wenigstens ein Teil der wenigstens einen Vorrichtung zur Einblendung eines Bildes bzw. deren optisches Trägerelement in dem Strahlengang der Zieloptik okularseitig bzw. zwischen dem Okular und einer dem Okular nächsten Zwischenbildebene angeordnet ist.

Die Zieloptik kann als Zielfernrohr ausgebildet sein.

Vorteilhafte Ausgestaltungen und Weiterbildungen der Erfindung ergeben sich aus den Unteransprüchen. Nachfolgend sind anhand der Zeichnung prinzipmäßig Ausführungsbeispiele der Erfindung angegeben.

Es zeigen:

Figur 1  eine schematische Darstellung einer als Zielfernrohr ausgebildeten Zieloptik mit einer erfindungsgemäßen Vorrichtung zur Einblendung eines Bildes in deren Strahlengang gemäß einer ersten Ausführungsform;

Figur 2  eine schematische Darstellung einer Zielmarkenanordnung mit mehreren bzw. flexiblen Zielpunkten;

Figur 3  eine schematische Darstellung der erfindungsgemäßen Vorrichtung in der ersten Ausführungsform;

Figur 4  eine perspektivische Ansicht der erfindungsgemäßen Vorrichtung in der ersten Ausführungsform;

Figur 5  eine perspektivische Ansicht der erfindungsgemäßen Vorrichtung in einer zweiten Ausführungsform;

Figur 6  eine vereinfachte Schnittansicht eines Teils des Zielfernrohrs mit der erfindungsgemäßen Vorrichtung in der ersten Ausführungsform;

Figur 7  eine schematische Darstellung einer Aperturanpassung bei der erfindungsgemäßen Vorrichtung gemäß der ersten Ausführungsform;

Figur 8  eine schematische Darstellung einer Pupillenanpassung der erfindungsgemäßen Vorrichtung gemäß der ersten Ausführungsform;

Figur 9  eine schematische Darstellung einer als Zielfernrohr ausgebildeten Zieloptik mit einer erfindungsgemäßen Vorrichtung zur Einblendung eines Bildes in einer dritten Ausführungsform;

Figur 10  eine schematische Darstellung der erfindungsgemäßen Vorrichtung in der dritten Ausführungsform;

Figur 11  eine perspektivische Ansicht der erfindungsgemäßen Vorrichtung in der dritten Ausführungsform; und

Figur 12  eine perspektivische Ansicht einer erfindungsgemäßen Vorrichtung zur Einblendung eines Bildes in einer vierten Ausführungsform.

Die Erfindung wird nachfolgend anhand eines Zielfernrohrs als Zieloptik verdeutlicht. Sie kann jedoch auch bei beliebigen anderen Zieloptiken zum Einsatz kommen.

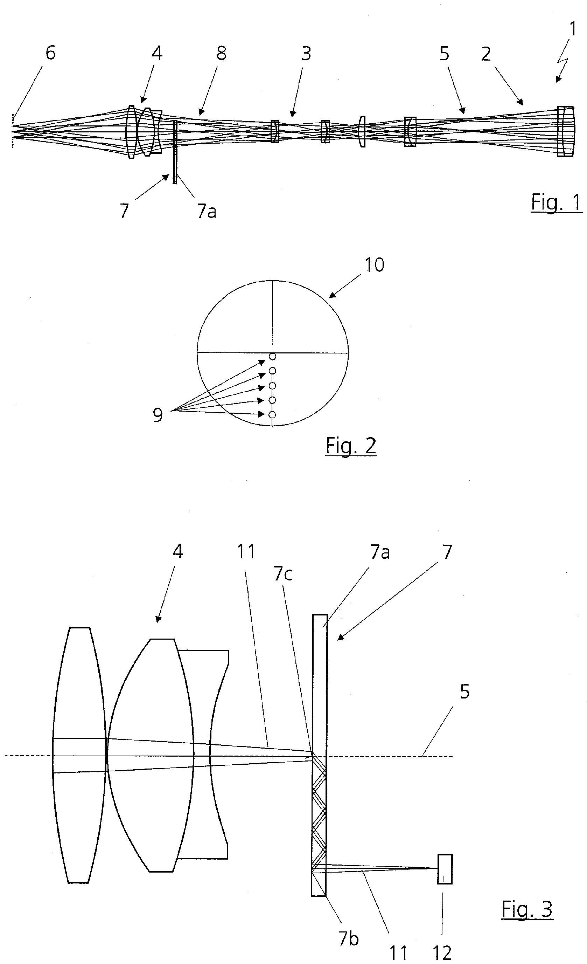

In Figur 1 ist eine als Zielfernrohr 1 ausgebildete Zieloptik mit variabler Vergrößerung schematisch ausschnittsweise dargestellt, welche lichteintrittsseitig ein Objektiv 2 sowie ein Linsenumkehrsystem mit einer Zoomoptik 3 und ein Okular 4 aufweist. Des weiteren ist ein Strahlengang 5 des Zielfernrohrs 1 gezeigt. Eine Austrittspupille 6 ist gestrichelt angedeutet.

Ein Zielfernrohr 1 mit variabler Vergrößerung ist aus dem Stand der Technik hinlänglich bekannt, wobei auf weitere nicht erfindungswesentliche Details nachfolgend nicht näher eingegangen wird.

Ein Teil einer erfindungsgemäßen Vorrichtung 7 zur Einblendung eines Bildes bzw. deren optisches Trägerelement 7a sind in dem Strahlengang 5 des Zielfernrohrs 1 okularseitig bzw. zwischen dem Okular 4 und einer dem Okular 4 nächsten Zwischenbildebene 8 angeordnet. Damit können, wie in Figur 2 vereinfacht angedeutet, variable bzw. flexible Zielpunkte 9 einer Zielmarkenanordnung 10 in den Strahlengang 5 des Zielfernrohrs 1 als Bild eingeblendet werden.

Im Folgenden sind funktionsgleiche Elemente mit gleichen Bezugszeichen - gegebenenfalls in unterschiedlichen Ausführungsformen mit Hochkommata versehen - benannt.

Wie aus Figur 3 ersichtlich, weist die Vorrichtung 7 zur Einblendung eines Bildes in den Strahlengang 5 der Zieloptik 1, ein teilweise lichtdurchlässiges optisches Trägerelement 7a auf, welches ein diffraktives optisches Einkoppelelement 7b und ein diffraktives optisches Auskoppelelement 7c aufweist, wobei das diffraktive optische Einkoppelelement 7b ein auf dieses einfallendes einzukoppelndes Licht 11 des einzublenden Bildes durch das optische Trägerelement 7a zur Überlagerung mit dem Strahlengang 5 (in Figur 3 gestrichelt angedeutet) zu dem diffraktiven optischen Auskoppelelement 7c leitet und wobei die Abbildung des einzublendenden Bildes in den Strahlengang 5 der Zieloptik 1 durch das diffraktive optische Einkoppelelement 7b und das diffraktive optische Auskoppelelement 7c erfolgt.

Wie weiter aus Figur 3 ersichtlich, bewirkt das diffraktive optische Einkoppelelement 7b eine Strahlablenkung des einzukoppelnden Lichts 11 auf einen derartigen Winkel bzw. Grenzwinkel $W_{Totalreflexion}$, dass innerhalb des optischen Trägerelements 7a eine Totalreflexion des einzukoppelnden Lichts 11 erreicht wird. Für den Grenzwinkel $W_{Totalreflexion}$ für das Auftreten von Totalreflexion gilt:

$$W_{Totalreflexion} = \arcsin(1/n),$$

wobei n die Brechzahl des Materials des optischen Trägerelements 7a ist.

Prinzipiell sollte die Gitterfrequenz des diffraktiven optischen Einkoppelelements 7b, 7b' derart gewählt werden, dass das Licht 11, 11' für alle Feldwinkel und Wellenlängen durch Totalreflexion in dem Trägerelement 7a geführt werden kann.

Die Gittergleichung des diffraktiven optischen Einkoppelelements 7b, 7b' lautet unter Berücksichtigung, dass die Beugung im Medium stattfindet, wie folgt:

$$\sin(\beta) = (k \times \lambda \times g - \sin(\alpha))/n,$$

wobei gilt:

k = Beugungsordnung
(im vorliegenden Ausführungsbeispiel k = +1),
$\lambda$ = Wellenlänge in nm,
g = Linienzahl in 1/mm bzw. Gitterfrequenz im Gitterscheitel,
$\alpha$ = Einfallswinkel auf das Gitter,
$\beta$ = Beugungswinkel am Gitter.

Somit muss für das diffraktive optische Einkoppelelement 7, 7b' bzw. das Reflexionsbeugungsgitter gelten, dass

$$\sin(\beta) > W_{Totalreflexion}$$

für alle Aperturwinkel und Wellenlängen, die verwendet werden, gilt. Im vorliegenden Ausführungsbeispiel beträgt der Grenzwinkel für die Totalreflexion beispielhaft $W_{Totalreflexion} = 41,3°$, während die Beugungswinkel $\beta$ am Reflexionsbeugungsgitter zwischen 52,2° und 54,1° liegen. Die zugehörigen Mittenstrichzahlen sind dabei für ein Reflexionsbeugungsgitter 1.841,9 Linien/mm und für ein Transmissionsbeugungsgitter 1.872,8 Linien/mm.

Des weiteren ist aus Figur 3 ersichtlich, dass eine dem diffraktiven optischen Einkoppelelement 7b zugewandte Bildwiedergabeeinheit 12 vorgesehen ist, welche das einzukoppelnde Licht 11 des einzublendenden Bildes erzeugt und auf das diffraktive optische Einkoppelelement 7b leitet.

Das diffraktive optische Einkoppelelement 7b bewirkt eine Kollimation des einzukoppelnden Lichts 11. Des weiteren bewirkt das diffraktive optische Auskoppelelement 7c mittels seiner beugenden Umlenkfunktion einen Austritt des eingekoppelten Lichts 11 aus dem optischen Trägerelement 7a in den Strahlengang 5 der Zieloptik 1. Im vorliegenden Ausführungsbeispiel bewirkt das diffraktive optische Auskoppelelement 7c auch eine Fokussierung des eingekoppelten Lichts 11 in den Strahlengang 5 der Zieloptik 1.

Im vorliegenden Ausführungsbeispiel ist das diffraktive optische Einkoppelelement 7b als Reflexionsbeugungsgitter ausgebildet, während das diffraktive optische Auskoppelelement 7c als Transmissionsbeugungsgitter ausgebildet ist. In weiteren Ausführungsbeispielen könnten sowohl das diffraktive optische Einkoppelelement 7b als auch das diffraktive optische Auskoppelelement 7c beide als Reflexionsbeugungsgitter oder beide als Transmissionsbeugungsgitter ausgebildet sein. Darüber hinaus ist es denkbar, das diffraktive optische Einkoppelelement 7b als Transmissionsbeugungsgitter und das diffraktive optische Auskoppelelement 7c als Reflexionsbeugungsgitter auszuführen.

Die Belichtungskonfiguration des diffraktiven optischen Auskoppelelements 7c lautet in der ersten Ausführungsform der erfindungsgemäßen Vorrichtung 7 wie folgt:

LC = ∞ mm;
LD = 15,5;
$\gamma$ = 0°;
$\delta$ = 59,045°;
g = 1872,8 Linien/mm;
Belichtungswellenlänge 457,9 nm; und
beugende Fläche 3,5 mm x 2,0 mm (Wert in Dispersionsrichtung).

Die Belichtungskonfiguration des diffraktiven optischen Einkoppelelements 7b lautet in der ersten Ausführungsform der erfindungsgemäßen Vorrichtung 7 wie folgt:

LC = ∞ mm;

LD = 24,31;
γ = 0°;
δ = 57,504°;
g = 1841,94 Linien/mm;
Belichtungswellenlänge 457,9 nm; und
beugende Fläche 5,0 mm x 2,0 mm (Wert in Dispersionsrichtung).

Die Größen LC, LD, γ, Δ bezeichnen die Polarkoordinaten der Laser-Quellpunkte während der Gitterbelichtung. LC und γ sind die Polarkoordinaten der ersten Laserquelle sowie LD und Δ die Polarkoordinaten der zweiten Laserquelle.

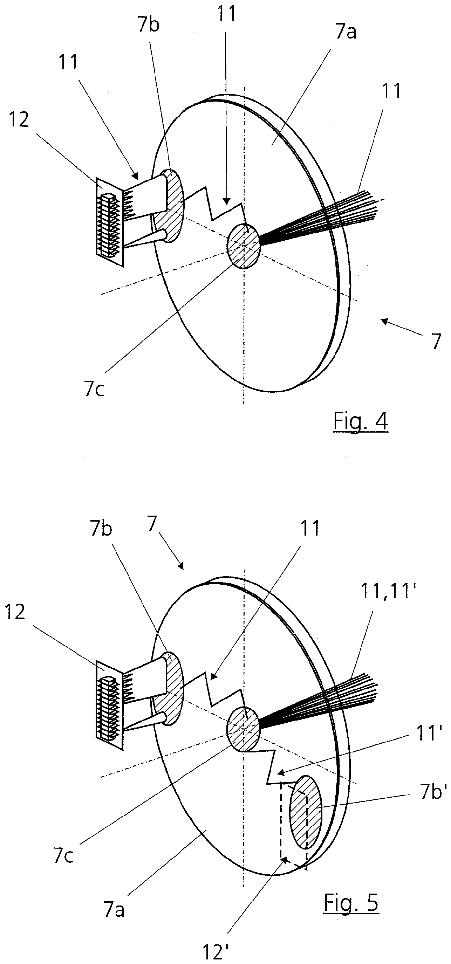

In Figur 4 ist die Vorrichtung 7 perspektivisch dargestellt. Die Bildwiedergabeeinheit 12 weist mehrere Leuchtdioden (LEDs) auf. Jede Leuchtdiode kann dabei einen unterschiedlichen Zielpunkt 9 (vergleiche Figur 2) erzeugen. Als Bildwiedergabeeinheit 12 eignen sich LED-Anzeigen, OLED-Anzeigen, LCD-Anzeigen oder Laserscannermodule.

In Figur 5 ist eine zweite Ausführungsform der erfindungsgemäßen Vorrichtung 7 dargestellt. Dabei ist in sehr vorteilhafter Weise ein zweites diffraktives optisches Einkoppelelement 7b' mit dem diffraktiven optischen Auskoppelelement 7c kombiniert, wodurch beispielsweise polychrome Bildinformationen in den Strahlengang 5 über eingekoppeltes Licht 11' der zweiten Bildwiedergabeeinheit 12' eingekoppelt wird. Die Bildwiedergabeeinheit 12' kann beispielsweise als LCD-Anzeige oder dergleichen ausgeführt sein.

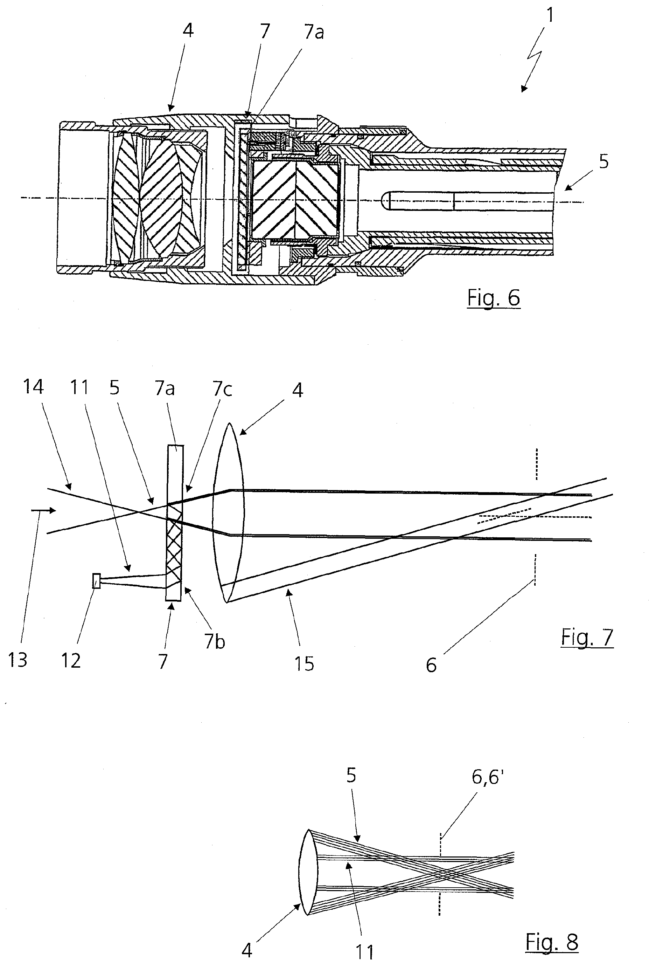

In Figur 6 ist das Zielfernrohr 1 mit der Vorrichtung 7 zur Einblendung eines Bildes in den Strahlengang 5 teilweise in einer Schnittansicht dargestellt.

Wie aus Figur 7 ersichtlich, ist in dem Strahlengang 5 der Zieloptik 1 in Ausbreitungsrichtung des Beobachtungslichts (durch Pfeil 13 angedeutet) hinter dem Okular 4 der Zieloptik 1 die Apertur bzw. Durchmesser des Strahlenbündels des eingekoppelten Lichts 11 wenigstens annähernd an die Apertur bzw. den Durchmesser des Achsstrahlenbündels 14 des Beobachtungslichts der Zieloptik 1 angepasst. Das Achsstrahlenbündel 14 umfasst dabei Strahlen ausgehend vom Mittelpunkt des Sehfeldes bis zum Pupilleneintritt bzw. Strahlen, welche die Pupille sozusagen voll ausfüllen. Ein Randstrahlenbündel ist schematisch mit dem Bezugszeichen 15 angedeutet. Der Strahlengang des eingekoppelten Lichts 11 ist in Figur 7 in dem optischen Trägerelement 7a nur stark vereinfacht skizziert.

Wie aus Figur 8 ersichtlich, stimmt in dem Strahlengang 5 der Zieloptik 1 die Position der Austrittspupille 6' des eingekoppelten Lichts 11 wenigstens annähernd mit der Position der Austrittspupille 6 des Beobachtungslichts der Zieloptik 1 überein.

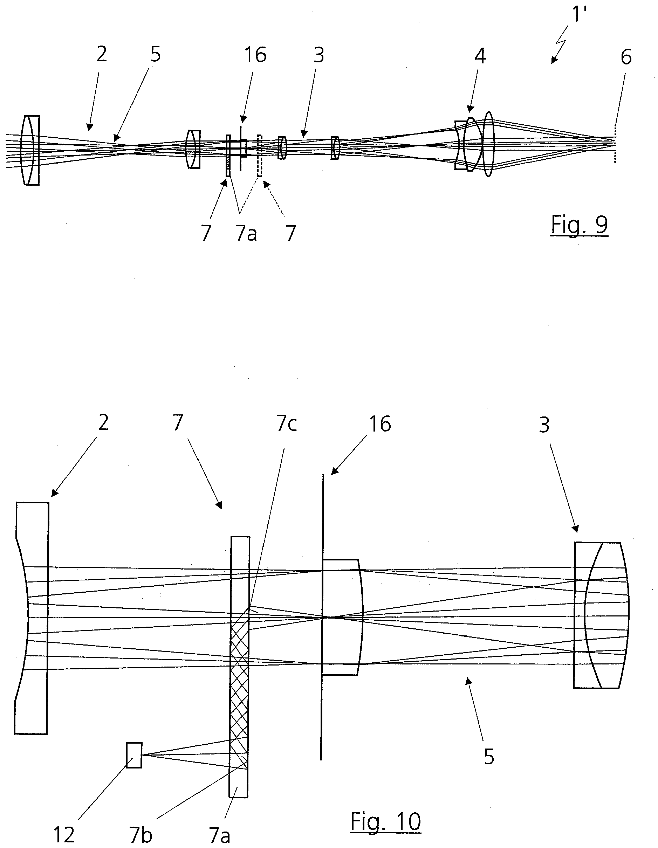

In Figur 9 ist eine weitere Ausführungsform eines Zielfernrohrs 1' dargestellt. Ein Teil einer Vorrichtung 7 in einer dritten Ausführungsform zur Einblendung eines Bildes bzw. deren optisches Trägerelement 7a ist in dem Strahlengang 5 des Zielfernrohrs 1' objektivseitig bzw. zwischen dem Objektiv 2 und einer dem Objektiv 2 nächsten Zwischenbildebene 16 angeordnet. In einem weiteren Ausführungsbeispiel könnte die Vorrichtung 7 auch zwischen der dem Objektiv 2 nächsten Zwischenbildebene 16 und der Zoomoptik 3 angeordnet sein (gestrichelt angedeutet). Die objektivseitige Anordnung der Vorrichtung 7 hat den Vorteil, dass sich die Zielpunkte 9 mit der über die Zoomoptik 3 eingestellten Vergrößerung in ihrer Größe ändern und somit das Deckungsmaß gleich bleibt, womit eine Entfernungsschätzung durch den Beobachter erfolgen kann.

In Figur 10 ist die Anordnung der Vorrichtung 7 in dem Zielfernrohr 1' genauer gezeigt.

Bei der dritten Ausführungsform der erfindungsgemäßen Vorrichtung 7 ist die Belichtungskonfiguration des diffraktiven optischen Auskoppelelements 7c (als holographisches Sinusprofil) wie folgt ausgeführt:

γ = 0°;
Δ = 53,9°;
LC = 10,7 mm;
LD = 269,0 mm;
α = 48,7°;
Transmissionsbeugung von BK7 in Luft; und
g = 1765 Linien/mm.

Analog lautet die Belichtungskonfiguration für das diffraktive optische Einkoppelelement 7b in der dritten Ausführungsform:

γ = -2.7°;
Δ = 58.8°;
LC = 15,1 mm;
LD = 280,0 mm;
α = 0°; und
g = 1765 Linien/mm.

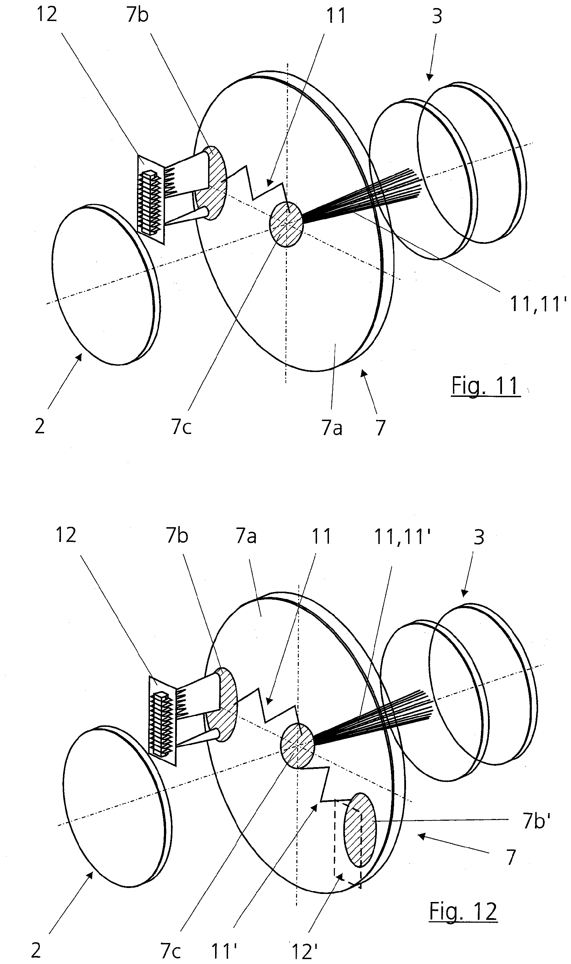

Figur 11 zeigt eine perspektivische Ansicht der Vorrichtung 7 in dem Zielfernrohr 1'.

Analog zu Figur 5 zeigt Figur 12 eine perspektivische Ansicht einer vierten Ausführungsform des Trägerelements 7a mit einem weiteren Einkoppelelement 7b', einer weiteren Bildwiedergabeeinheit 12' und somit eines zusätzlich einzukoppelnden Lichts 11'.

Die diffraktiven optischen Einkoppelelemente 7b, 7b' und das diffraktive optische Auskoppelelement 7c sind als holographische, d. h. holographisch hergestellte optische Elemente bzw. Hologramme ausgebildet.

Das optische Trägerelement 7a ist eine aus Glas gebildete Planplatte. In weiteren Ausführungsbeispielen könnte es auch aus Kunststoff gefertigt sein.

Das einzublendende Bild kann auch Zusatzinformationen bzw. -daten alternativ oder zusätzlich zu den Zielpunkten 9 aufweisen.

Bezugszeichenliste:

| | |
|---|---|
| 1,1' | Zielfernrohr |
| 2 | Objektiv |
| 3 | Zoomoptik |
| 4 | Okular |
| 5 | Strahlengang |
| 6,6' | Austrittspupille |
| 7 | erfindungsgemäße Vorrichtung |
| 7a | Trägerelement |
| 7b,7b' | diffraktives optisches Einkoppelelement |
| 7c | diffraktives optisches Auskoppelelement |
| 8 | Zwischenbildebene okularseitige |
| 9 | Zielmarken, Zielpunkte |
| 10 | Zielmarkenanordnung |
| 11,11' | einzukoppelndes bzw. eingekoppeltes Licht |
| 12 | Bildwiedergabeeinheit |
| 12' | zweite Bildwiedergabeeinheit |
| 13 | Pfeil |
| 14 | Achsstrahlenbündel |
| 15 | Randstrahlenbündel |
| 16 | objektivseitige Zwischenbildebene |

**Patentansprüche**

1.  Zieloptik (1,1') mit einem in Betriebsstellung einem zu beobachtenden Zielobjekt zuzuwendenden Objektiv (2), einem einem Auge eines Beobachters zuzuwendenden Okular (4), einem Strahlengang (5) und wenigstens einer Vorrichtung (7) zur Einblendung eines Bildes in den Strahlengang (5) der Zieloptik (1,1'), mit einem in dem Strahlengang (5) der Zieloptik (1,1') angeordneten wenigstens teilweise lichtdurchlässigen optischen Trägerelement (7a), welches wenigstens ein diffraktives optisches Einkoppelelement (7b, 7b') und wenigstens ein diffraktives optisches Auskoppelelement (7c) aufweist, wobei das wenigstens eine diffraktive optische Einkoppelelement (7b,7b') ein auf dieses einfallendes einzukoppelndes Licht (11,11') des einzublendenden Bildes durch das optische Trägerelement (7c) hindurch zur Überlagerung mit dem Strahlengang (5) zu dem wenigstens einen diffraktiven optischen Auskoppelelement (7a) leitet und wobei die Abbildung des einzublendenden Bildes in den Strahlengang (5) der Zieloptik (1,1') durch das wenigstens eine diffraktive optische Einkoppelelement (7b,7b') und das wenigstens eine diffraktive optische Auskoppelelement (7c) erfolgt.

2.  Zieloptik nach Anspruch 1, **dadurch gekennzeichnet, dass** das diffraktive optische Einkoppelelement (7b,7b') eine Strahlablenkung des einzukoppelnden Lichts (11,11') auf einen derartigen Winkel bewirkt, dass innerhalb des optischen Trägerelements (7a) eine Totalreflexion des einzukoppelnden Lichts (11,11') erreicht wird.

3.  Zieloptik nach Anspruch 1 oder 2, **dadurch gekennzeichnet, dass** das diffraktive optische Einkoppelelement (7b,7b') eine Kollimation des einzukoppelnden Lichts (11,11') bewirkt.

4. Zieloptik nach Anspruch 1, 2 oder 3, **dadurch gekennzeichnet, dass** das diffraktive optische Auskoppelelement (7c) mittels seiner beugenden Umlenkfunktion einen Austritt des eingekoppelten Lichts (11,11') aus dem optischen Trägerelement (7a) in den Strahlengang (5) der Zieloptik (1) bewirkt.

5. Zieloptik nach einem der Ansprüche 1 bis 4, **dadurch gekennzeichnet, dass** das diffraktive optische Auskoppelelement (7c) eine Fokussierung des eingekoppelten Lichts (11,11') in den Strahlengang (5) der Zieloptik (1) bewirkt.

6. Zieloptik nach einem der Ansprüche 1 bis 5, **dadurch gekennzeichnet, dass** das wenigstens eine diffraktive optische Einkoppelelement (7b,7b') als Reflexionsbeugungsgitter oder Transmissionsbeugungsgitter ausgebildet ist.

7. Zieloptik nach einem der Ansprüche 1 bis 6, **dadurch gekennzeichnet, dass** das wenigstens eine diffraktive optische Auskoppelelement (7c) als Reflexionsbeugungsgitter oder Transmissionsbeugungsgitter ausgebildet ist.

8. Zieloptik nach einem der Ansprüche 1 bis 7, **dadurch gekennzeichnet, dass** eine dem diffraktiven optischen Einkoppelelement (7b,7b') zugewandte Bildwiedergabeeinheit (12,12') vorgesehen ist, welche das einzukoppelnde Licht (11,11') des einzublendenden Bildes erzeugt und auf das diffraktive optische Einkoppelelement (7b,7b') leitet.

9. Zieloptik nach einem der Ansprüche 1 bis 8, **dadurch gekennzeichnet, dass** in dem Strahlengang (5) der Zieloptik (1) in Ausbreitungsrichtung (13) des Beobachtungslichts hinter dem Okular (4) der Zieloptik (1) die Apertur bzw, der Durchmesser des Strahlenbündels des eingekoppelten Lichts (11,11') wenigstens annähernd an die Apertur bzw. den Durchmesser des Achsstrahlenbündels (14) des Beobachtungslichts der Zieloptik (1) angepasst ist.

10. Zieloptik nach einem der Ansprüche 1 bis 9, **dadurch gekennzeichnet, dass** in dem Strahlengang (5) der Zieloptik (1) die Position der Austrittspupille (6') des eingekoppelten Lichts (11,11') wenigstens annähernd mit der Position der Austrittspupille (6) des Beobachtungslichts der Zieloptik (1) übereinstimmt.

11. Zieloptik nach einem der Ansprüche 1 bis 10, **dadurch gekennzeichnet, dass** das optische Trägerelement (7a) eine vorzugsweise aus Glas gebildete Planplatte ist.

12. Zieloptik nach einem der Ansprüche 1 bis 11, **dadurch gekennzeichnet, dass** wenigstens ein diffraktives optisches Einkoppelelement (7b,7b') und/oder wenigstens ein diffraktives optisches Auskoppelelement (7c) als holographisches optisches Element ausgebildet ist.

13. Zieloptik nach einem der Ansprüche 1 bis 12, **dadurch gekennzeichnet, dass** das optische Trägerelement (7a) in dem Strahlengang (5) der Zieloptik (1') objektivseitig bzw. zwischen dem Objektiv (2) und einer dem Objektiv (2) nächsten Zwischenbildebene (16) oder zwischen der dem Objektiv (2) nächsten Zwischenbildebene (16) und einer gegebenenfalls vorhandenen Zoomoptik (3) angeordnet ist.

14. Zieloptik nach einem der Ansprüche 1 bis 13, **dadurch gekennzeichnet, dass** das optische Trägerelement (7a) in dem Strahlengang (5) der Zieloptik (1) okularseitig bzw. zwischen dem Okular (4) und einer dem Okular (4) nächsten Zwischenbildebene (8) angeordnet ist.

## Claims

1. Sighting optical unit (1, 1') having an objective (2) which, in the operating setting, is to face towards a target object that is to be observed, an eyepiece (4) which is to face towards an eye of an observer, a beam path (5) and at least one apparatus (7) for superimposing an image into the beam path (5) of the sighting optical unit (1, 1'), having an at least partially light-transmissive optical carrier element (7a) which is arranged in the beam path (5) of the sighting optical unit (1, 1') and has at least one diffractive optical input coupling element (7b, 7b') and at least one diffractive optical output coupling element (7c), wherein the at least one diffractive optical input coupling element (7b, 7b') guides light (11, 11'), which is incident thereon and is to be coupled in, of the image to be superimposed through the optical carrier element (7c) for superposition with the beam path (5) to the at least one diffractive optical output coupling element (7a), and wherein the image to be superimposed is imaged into the beam path (5) of the sighting optical unit (1, 1') through the at least one diffractive optical input coupling element (7b, 7b') and the at least one diffractive optical output coupling element (7c).

2. Sighting optical unit according to Claim 1, **characterized in that** the diffractive optical input coupling element (7b, 7b') causes a beam deflection of the light (11, 11'), which is to be coupled in, to an angle such that total internal reflection of the light (11, 11') that is to be coupled in is achieved within the optical carrier element (7a).

3. Sighting optical unit according to Claim 1 or 2, **characterized in that** the diffractive optical input coupling element (7b, 7b') causes collimation of the light (11, 11') that is to be coupled in.

4. Sighting optical unit according to Claim 1, 2 or 3, **characterized in that** the diffractive optical output coupling element (7c) causes, by way of its diffractive deflection function, an exit of the coupled-in light (11, 11') from the optical carrier element (7a) into the beam path (5) of the sighting optical unit (1).

5. Sighting optical unit according to one of Claims 1 to 4, **characterized in that** the diffractive optical output coupling element (7c) causes focusing of the coupled-in light (11, 11') into the beam path (5) of the sighting optical unit (1).

6. Sighting optical unit according to one of Claims 1 to 5, **characterized in that** the at least one diffractive optical input coupling element (7b, 7b') is configured in the form of a reflection diffraction grating or a transmission diffraction grating.

7. Sighting optical unit according to one of Claims 1 to 6, **characterized in that** the at least one diffractive optical output coupling element (7c) is configured in the form of a reflection diffraction grating or a transmission diffraction grating.

8. Sighting optical unit according to one of Claims 1 to 7, **characterized in that** an image reproduction unit (12, 12') facing the diffractive optical input coupling element (7b, 7b') is provided, which generates the light (11, 11'), which is to be coupled in, of the image to be superimposed and guides it onto the diffractive optical input coupling element (7b, 7b').

9. Sighting optical unit according to one of Claims 1 to 8, **characterized in that** the aperture or the diameter of the beam of the light (11, 11'), which is to be coupled in, in the beam path (5) of the sighting optical unit (1) in the propagation direction (13) of the observation light behind the eyepiece (4) of the sighting optical unit (1) is at least approximately adapted to the aperture or the diameter of the axial beam (14) of the observation light of the sighting optical unit (1).

10. Sighting optical unit according to one of Claims 1 to 9, **characterized in that** the position of the exit pupil (6') of the coupled-in light (11, 11') in the beam path (5) of the sighting optical unit (1) at least approximately matches the position of the exit pupil (6) of the observation light of the sighting optical unit (1).

11. Sighting optical unit according to one of Claims 1 to 10, **characterized in that** the optical carrier element (7a) is a planar plate which is preferably made from glass.

12. Sighting optical unit according to one of Claims 1 to 11, **characterized in that** at least one diffractive optical input coupling element (7b, 7b') and/or at least one diffractive optical output coupling element (7c) is configured in the form of a holographic optical element.

13. Sighting optical unit according to one of Claims 1 to 12, **characterized in that** the optical carrier element (7a) is arranged in the beam path (5) of the sighting optical unit (1') on the objective side or between the objective (2) and an intermediate image plane (16) that is nearest to the objective (2), or between the intermediate image plane (16) that is nearest to the objective (2) and a zoom optical unit (3) which may be present.

14. Sighting optical unit according to one of Claims 1 to 13, **characterized in that** the optical carrier element (7a) is arranged in the beam path (5) of the sighting optical unit (1) on the eyepiece side or between the eyepiece (4) and an intermediate image plane (8) that is nearest to the eyepiece (4).

**Revendications**

1. Optique de visée (1, 1') comportant un objectif (2) qui, dans la position de fonctionnement, est tourné vers un objet cible à observer, un oculaire (4) qui est tourné vers l'oeil d'un observateur, un chemin de faisceau (5) et au moins un dispositif (7) destiné à insérer une image dans le chemin de faisceau (5) de l'optique de visée (1, 1'), comportant un élément de support optique (7a) au moins partiellement transparent à la lumière, disposé sur le chemin de faisceau (5) de l'optique de visée (1, 1'), qui comporte au moins un élément de couplage d'entrée optique diffractant (7b, 7b') et au moins un élément de couplage de sortie optique diffractant (7c), dans lequel l'au moins un élément de couplage d'entrée optique diffractant (7b, 7b') achemine une lumière (11, 11') devant être couplée en entrée incidente sur celui-ci et provenant de l'image devant être insérée par l'intermédiaire de l'élément optique (7c) afin qu'elle soit superposée au chemin de faisceau (5) vers l'au moins un élément de couplage de sortie optique diffractant (7a) et dans lequel la formation d'image de l'image devant être insérée dans le chemin de faisceau (5) de l'optique de visée (1, 1') est effectuée par l'au moins un élément de couplage d'entrée optique diffractant (7b, 7b') et l'au moins un élément de couplage de sortie optique diffractant (7c).

2. Optique de visée selon la revendication 1, **caractérisée en ce que** l'élément de couplage d'entrée optique diffractant (7b, 7b') provoque une déviation du faisceau de lumière devant être couplé en entrée (11, 11') suivant un angle tel qu'une réflexion totale de la lumière devant être couplée en entrée (11, 11') est obtenue à l'intérieur de l'élément de support optique (7a).

3. Optique de visée selon la revendication 1 ou 2, **caractérisée en ce que** l'élément de couplage d'entrée optique diffractant (7b, 7b') provoque une collimation de la lumière devant être couplée en entrée (11, 11').

4. Optique de visée selon la revendication 1, 2 ou 3, **caractérisée en ce que** l'élément de couplage de sortie optique diffractant (7c) provoque, du fait de sa fonction de déviation par diffraction, la sortie de la lumière couplée en entrée (11, 11') hors de l'élément de support optique (7a) dans le chemin de faisceau (5) de l'optique de visée (1).

5. Optique de visée selon l'une quelconque des revendications 1 à 4, **caractérisée en ce que** l'élément de couplage de sortie optique diffractant (7c) provoque une focalisation de la lumière couplée en entrée (11, 11') dans le chemin de faisceau (5) de l'optique de visée (1).

6. Optique de visée selon l'une quelconque des revendications 1 à 5, **caractérisée en ce que** l'au moins un élément de couplage d'entrée optique diffractant (7b, 7b') est réalisé sous la forme d'un réseau de diffraction de réflexion ou d'un réseau de diffraction de transmission.

7. Optique de visée selon l'une quelconque des revendications 1 à 6, **caractérisée en ce que** l'au moins un élément de couplage de sortie optique diffractant (7c) est réalisé sous la forme d'un réseau de diffraction de réflexion ou d'un réseau de diffraction de transmission.

8. Optique de visée selon l'une quelconque des revendications 1 à 7, **caractérisée en ce qu'**il est prévu une unité de rendu d'image (12, 12') tournée vers l'élément de couplage d'entrée optique diffractant (7b, 7b'), qui génère la lumière devant être couplée en entrée (11, 11') de l'image devant être insérée et l'achemine vers l'élément de couplage d'entrée optique diffractant (7b, 7b').

9. Optique de visée selon l'une quelconque des revendications 1 à 8, **caractérisée en ce que** l'ouverture ou le diamètre du faisceau de rayonnement de la lumière couplée en entrée (11, 11') dans le chemin de faisceau (5) de l'optique de visée (1), dans la direction de propagation (13) de la lumière d'observation, à l'arrière de l'oculaire (4) de l'optique de visée (1), est adaptée au moins approximativement à l'ouverture ou au diamètre du faisceau de rayonnement axial (14) de la lumière d'observation de l'optique de visée (1).

10. Optique de visée selon l'une quelconque des revendications 1 à 9, **caractérisée en ce que** la position de la pupille de sortie (6') de la lumière couplée en entrée (11, 11') dans le chemin de faisceau (5) de l'optique de visée (1), concorde au moins approximativement avec la position de la pupille de sortie (6) de la lumière d'observation de l'optique de visée (1).

11. Optique de visée selon l'une quelconque des revendications 1 à 10, **caractérisée en ce que** l'élément de support optique (7a) est de préférence une lame plane constituée de verre.

12. Optique de visée selon l'une quelconque des revendications 1 à 11, **caractérisée en ce qu'**au moins un élément de couplage d'entrée optique diffractant (7b, 7b') et/ou au moins un élément de couplage de sortie optique diffractant (7c) est/sont réalisé(s) sous la forme d'un élément optique holographique.

13. Optique de visée selon l'une quelconque des revendications 1 à 12, **caractérisée en ce que** l'élément de support optique (7a) est disposé dans le chemin de faisceau (5) de l'optique de visée (1') côté objectif ou entre l'objectif (2) et un plan image intermédiaire (16) situé après l'objectif (2) ou entre le plan image intermédiaire (16) situé après l'objectif (2) et une optique de variation de focale (3) éventuellement présente.

**14.** Optique de visée selon l'une quelconque des revendications 1 à 13, **caractérisée en ce que** l'élément de support optique (7a) est disposé dans le chemin de faisceau (5) de l'optique de visée (1) côté oculaire ou entre l'oculaire (4) et un plan image intermédiaire (8) situé après l'oculaire (4).

Fig. 1

Fig. 2

Fig. 3

Fig. 4

Fig. 5

4    7    7a

1

5

<u>Fig. 6</u>

14   11   5   7a   7c   4

13   12   7   7b   15   6

<u>Fig. 7</u>

5   6,6'

4   11

<u>Fig. 8</u>

Fig. 9

Fig. 10

Fig. 11

Fig. 12

**IN DER BESCHREIBUNG AUFGEFÜHRTE DOKUMENTE**

**In der Beschreibung aufgeführte Patentdokumente**

- EP 0886163 B1
- EP 1653271 A1
- DE 19525520 C2
- WO 0016150 A